# EUROPÄISCHE PATENTSCHRIFT

(11) **EP 1 272 740 B1**
(45) Veröffentlichungstag und Bekanntmachung des Hinweises auf die Patenterteilung: **13.12.2006**
(21) Anmeldenummer: 01916830.1
(22) Anmeldetag: 02.04.2001
(51) Int. Cl.: F01L 1/047

(54) **NOCKENWELLE SOWIE VERFAHREN UND VORRICHTUNG ZU IHRER HERSTELLUNG**
CAMSHAFT AND A METHOD AND A DEVICE FOR PRODUCING THE SAME
ARBRE A CAMES ET PROCEDE ET DISPOSITIF PERMETTANT DE PRODUIRE LEDIT ARBRE A CAMES

(30) Priorität: 14.04.2000 CH 739002000
(43) Veröffentlichungstag der Anmeldung: 08.01.2003
(73) Patentinhaber: Merz, Karl, CH-5734 Reinach/AG (CH)
(72) Erfinder: Merz, Karl, CH-5734 Reinach/AG (CH)
(74) Vertreter: Isler & Pedrazzini AG
(86) Internationale Anmeldenummer: PCT/CH2001/000208
(87) Internationale Veröffentlichungsnummer: WO 2001/079661

(56) Entgegenhaltungen:
- DE-A- 3 736 422
- DE-A- 4 306 621
- US-A- 5 299 881
- PATENT ABSTRACTS OF JAPAN vol. 015, no. 447 (M-1179), 14. November 1991 (1991-11-14) & JP 03 189308 A (MAZDA MOTOR CORP), 19. August 1991 (1991-08-19)
- PATENT ABSTRACTS OF JAPAN vol. 017, no. 126 (M-1381), 17. März 1993 (1993-03-17) & JP 04 308305 A (NIPPON PISTON RING CO LTD), 30. Oktober 1992 (1992-10-30)
- PATENT ABSTRACTS OF JAPAN vol. 015, no. 457 (M-1181), 20. November 1991 (1991-11-20) & JP 03 194105 A (MAZDA MOTOR CORP), 23. August 1991 (1991-08-23)
- PATENT ABSTRACTS OF JAPAN vol. 015, no. 432 (M-1175), 5. November 1991 (1991-11-05) & JP 03 181654 A (MAZDA MOTOR CORP), 7. August 1991 (1991-08-07)
- PATENT ABSTRACTS OF JAPAN vol. 015, no. 432 (M-1175), 5. November 1991 (1991-11-05) & JP 03 181652 A (MAZDA MOTOR CORP), 7. August 1991 (1991-08-07)
- PATENT ABSTRACTS OF JAPAN & JP 59 064187 A (HITACHI LTD), 12. April 1984 (1984-04-12)

## Beschreibung

### TECHNISCHES GEBIET

Die vorliegende Erfindung betrifft eine Nockenwelle, wie sie z.B Anwendung findet in Verbrennungsmotoren für Automobile, mit einer zylindrischen Welle und mit mindestens einer auf diese aufgeschobenen und auf ihr dreh- und verschiebungsfest fixierten hohlzylindrischen Nocke.

Derartige, aus mehren Einzelteilen zusammengefügte Nockenwellen werden in zunehmendem Masse anstelle von giess- oder schmiedetechnisch hergestellen Nockenwellen verwendet.

Die Erfindung betrifft weiter ein neuartiges Herstellungsverfahren für solche Nockenwellen und auch noch eine Vorrichtung zur Durchführung des Verfahrens.

### STAND DER TECHNIK

Zur Fixierung der meist mehreren Nocken auf der Welle sind im Stand der Technik verschiedene Verfahren bekannt:
Bei einem ersten solchen Verfahren werden die Wellen im Bereich der Nocken mit einem aufgerollten, über den Wellendurchmesser überstehenden Nullsteigungsgewinde und die Öffnung bzw. Bohrung der Nocken mit eingeräumten Axialnuten versehen. Beim Aufpressen der Nocken auf die Welle entsteht ein Formkraftschluss zwischen den beiden Teilen, indem sich die beiden Kontouren ineinander verkrallen. Das Verfahren hat jedoch verschiedene Nachteile:
   - Beim Rollieren verlängern und verbiegen sich die Wellen nicht unerheblich. Jede Welle muss deshalb anschliessend auf ihr Sollmass gekürzt und die Verbiegung durch Richten wieder beseitigt werden. Die Lagerstellen der Wellen können erst nach dem Aufpressen der Nocken auf Endmass geschliffen werden. Die auftretenden Toleranzen müssen durch ein Übermass von mindestens 0,5 mm berücksichtigt werden.
   - Die Nocken deformieren sich beim Aufpressen, wobei dieses sogenannte Nockenwachstum varriert und nicht gut kontrollierbar ist. Dies bedingt auch eine Nachbearbeitung jeder einzelnen Nocke durch Schleifen. Hierbei kommt es je nach Deformation der Nocke zu einem über ihren Umfang ungleichmässigen Materialabtrag kommen. Eine zuvor induktiv erzeugte Oberflächen-Härtezone einheitlicher Dicke wird dadurch ungleichmässig dick. Da eine Mindestdicke für diese Härtezone meist vorgeschrieben ist, muss auch sie von vornherein überdimensioniert werden.
   - Beim Aufpressen der Nocken kann es vorkommen, dass diese etwas verkippen, weil die erwähnten Rillensysteme einen geraden Sitz der Nocken auf der Welle nicht erzwingen. Die Nocken taumeln dann etwas. Hinzu kommt, dass die in Aufpressrichtung vordere Kante ihrer Öffnung stets mit einer Phase versehen ist, was die für die Ausrichtung und den Sitz der Nocken wichtige axiale Länge der Nocken etwas verkürzt. Auch diese Toleranzen müssen durch eine ausreichendes Übermass berücksichtigt und nachfolgend duch Schleifen wieder beseitigt werden.
   - Bei dem gewaltsamen Aufpressen der Nocken besteht die Gefahr der Rissbildung in den Nocken, was sich als Ausschussquelle auswirkt.
   - Die Herstellung ist durch die vielen notwendigen Bearbeitungsschritte und den erheblichen Grad an Nachbearbeitung nach dem Aufpressen der Nocken recht zeitintensiv.
Bei einem anderen Verfahren wird zwischen den Nocken und der Welle ein Schrumpfsitz erzeugt. Hierbei wird die Öffnung der Nocken im Durchmesser etwas geringer gewählt als der Aussendurchmesser der Welle. Die Nocken werden dann in erwärmtem Zustand auf die tiefgekühlte Welle aufgeschoben. Nach Temperaturausgleich der Teile ergibt sich der gewünschte Schrumpfsitz. Dieser ist allerdings meist nicht ausreichend fest, um den z.B. in einem Automotor an den Nocken auftretenden Drehmomenten standzuhalten. Eine Verzahnung, ähnlich wie bei den vorbeschriebenen Verfahren, ist deshalb meist zusätzlich erforderlich.

Bei einem weiteren Verfahren wird die als Rohr ausgebildete Welle nach dem Aufschieben der Nocken mit einem Innenhochdruck beaufschlagt, wodurch sie sich ausdehnt und es dadurch ebenfalls zu einem Pressitz der Nocken auf der Welle kommt. Da sich die Welle im Bereich zwischen den Nocken sogar über den Innendurchmesser der Nocken hinaus ausdehnt, müssen zumindest auch hier die in diesen Zonen angeordneten Lagerstellen durch Schleifen erheblich nachbearbeitet werden.

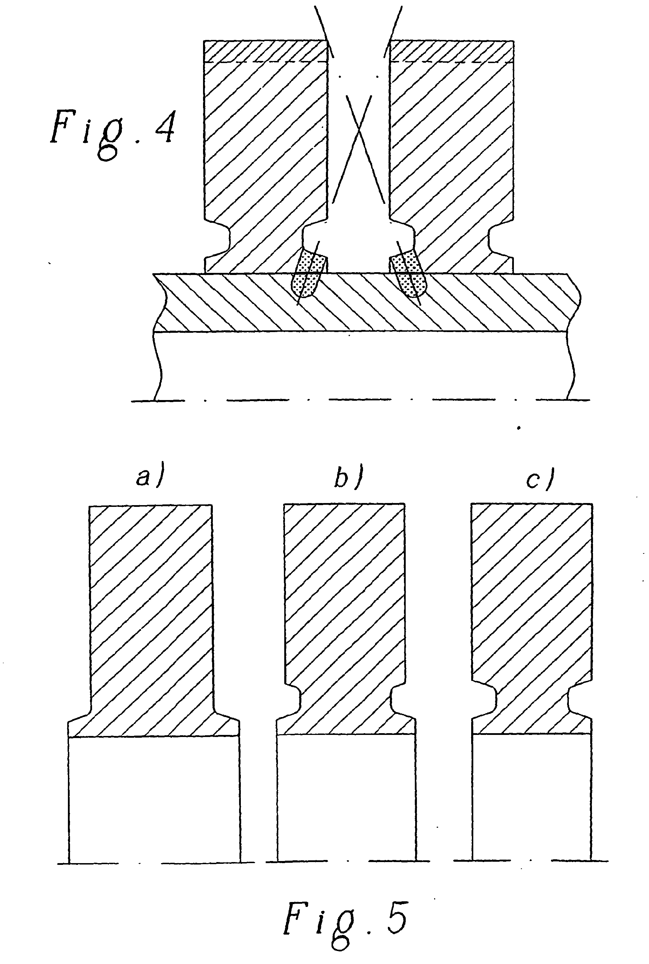

Aus der US-A-5,299,881 ist eine Verfahren zur Herstellung einer gebauten Nockenwelle bekannt, bei dem die Nocken beidseitig mit einer Fussleiste versehen, auf die eigentliche Welle geschoben und dann im Bereich der Fussleisten mit der Welle verbunden werden. In einem Fall (Fig. 5, 5a) kann dies durch einen Laserstrahl geschehen, der die Berührungskante der Fussleiten mit der Welle partiell oder umlaufend verschweisst.

Aus der JP-A-59064187 ist bekannt, einen Körper aus Material mit geringem Kohlenstoffgehalt und eine Platte aus Material mit einem hohen Kohlenstoffgehalt dadurch rissfrei zu verschweissen, dass an der Berührungskante des Körpers eine schräge Verstärkung angeordnet wird, die Hinterschneidungen in diesem Körper beim Schweissen verhindert.

Aus der JP-A-03189308 ist schliesslich bekannt, einen Nocken mittels Laserstrahl ohne Fussleisten mit einer Welle zu verschweissen und zusätzlich hart zu verlöten.

### DARSTELLUNG DER ERFINDUNG

Die vorliegende Erfindung stellt sich die Aufgabe, eine Nockenwelle der eingangs genannten Art anzugeben, welche bei ausreichender Festigkeit insbesondere schneller und kostengünstiger herstellbar ist. Erfindungsgemäss gelöst wird diese Aufgabe durch eine Nockenwelle, wie sie im Patentanspruch 1 definiert ist und bei welcher die mindestens eine Nocke mindestens einseitig angrenzend an das Rohr mit einer Fussleiste versehen ist und entlang dieser mindestens einen Fussleiste und durch diese hindurch mit der Welle verschweisst ist.

Ein entsprechendes Verfahren zur Herstellung einer solchen Nockenwelle ist im Patentanspruch 6 angegeben.

Patentanspruch 18 betrifft auch noch eine Vorrichtung zur Herstellung einer solchen Nockenwelle nach dem Verfahren von Patentanspruch 6.

Vorteilhafte und deshalb bevorzugte Ausgestaltungen und Weiterbildungen der Erfindungsgegenstände sind jeweils in den abhängigen Ansprüchen angegeben.

Die mit der Erfindung erreichten Vorteile sind vor allem in folgendem zu sehen:

Da ein Rollieren der Wellen entfällt, somit kein Längenwachstum der Wellen und auch keine dadurch verusachte Verbiegung auftritt und auch die Nocken beim Aufbringen und Aufschweissen auf die Wellen kein Nockenwachstum erfahren, können sowohl die Wellen als auch die Nocken vor dem Zusammenfügen bereits auf ihr jeweiliges Endmass oder wenigstens annähernd bis auf nur wenige hunderstel Millimeter (near endshape) auf ihr Endmass bearbeitet werden. Ein aufwendiges Nachbearbeiten durch Schleifen entfällt oder wird auf eine Mindestmass reduziert. Hierdurch müssen die Wellen und die Nocken vor ihrer Verbindung nicht überdimensioniert werden. Indem auch ein ungleiches Abtragen von Oberflächenhärtezonen vermieden wird, müssen auch diese nicht überdimensioniert werden.

Indem die Nocken mit einer glatten Öffnung oder Bohrung versehen werden können und der Durchmesser der Öffnung dem Aussendurchmesser der Wellen sehr genau angepasst werden kann, brauchen die Nocken nicht mit grosser Kraft auf die Wellen aufgepresst werden, wodurch einerseits ein Kippen der Nocken sowie auch eine Rissbildung in den Nocken vermieden wird.

Die Nockenwellen nach der Erfindung sind, verglichen mit den vorbekannten, in kürzerer Zeit unter Anwendung von weniger Arbeitsvorgängen, insbesondere mit weniger Nachbearbeitung, mit hoher Genauigkeit und mit wenig Ausschuss äusserst rationell und kostengünstig herstellbar.

Es besteht grosse Freiheit in der Wahl der Materialien für die Wellen einerseits und die Nocken andererseits sowie höchstmögliche Bauartenflexibilität.

### KURZE ERLÄUTERUNG DER FIGUREN

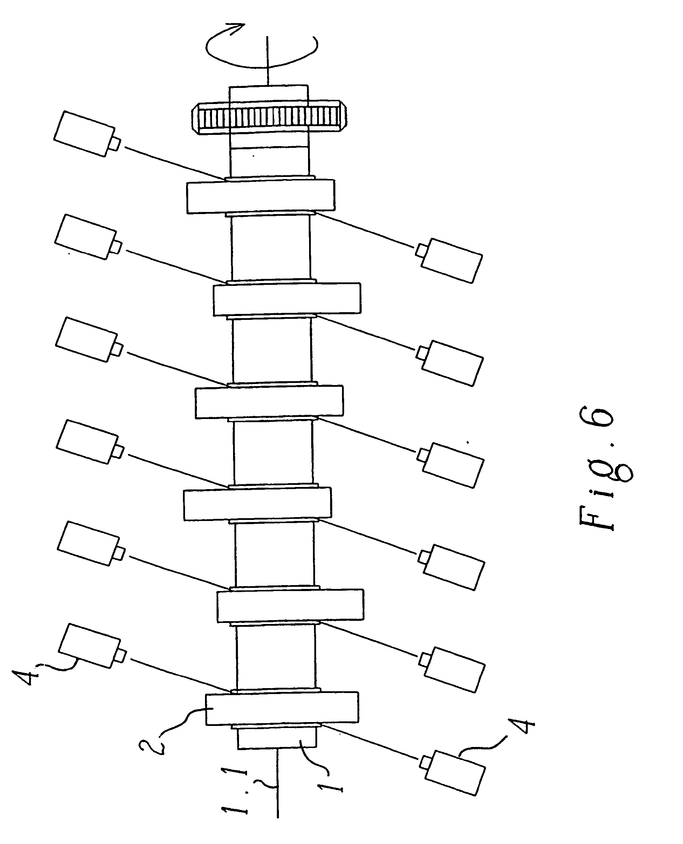

Die Erfindung soll nachfolgend anhand von Ausführungsbeispielen im Zusammenhang mit der Zeichnung näher erläutert werden. Es zeigen bis auf Fig. 6 jeweils im Schnitt:
- Fig. 1: einen kurzen Abschnitt einer Nockenwelle nach der Erfindung mit einer zunächst nur einseitig an der rohrförmigen Welle angeschweissten, mit Schweiss-Fussleisten versehenen Nocke;
- Fig. 2: in einem Ausschnitt die Schweissnaht, wie sie sich ohne solche Schweiss-Fussleisten ergeben würde;
- Fig. 3: eine alternative Ausbildung zu Fig. 1, bei welcher die Schweiss-Fussleisten an der dargestellten Nocke nicht über deren Stirnseiten vorstehen und jeweils durch eine Rille ausgeformt sind;
- Fig. 4: eine Darstellung wie Fig. 3, nur mit zwei eng beieinanderstehenden Nocken;
- Fig. 5: drei Nocken mit unterschiedlich ausgebildeten Fussleisten nebeneinander im Vergleich; und
- Fig. 6: schematisch in Ansicht eine Anordnung zur Herstellung der Nockenwellen nach der Erfindung mit einer Vielzahl von Laser- oder Elektronenstrahlschweissköpfen.

### WEGE ZUR AUSFÜHRUNG DER ERFINDUNG

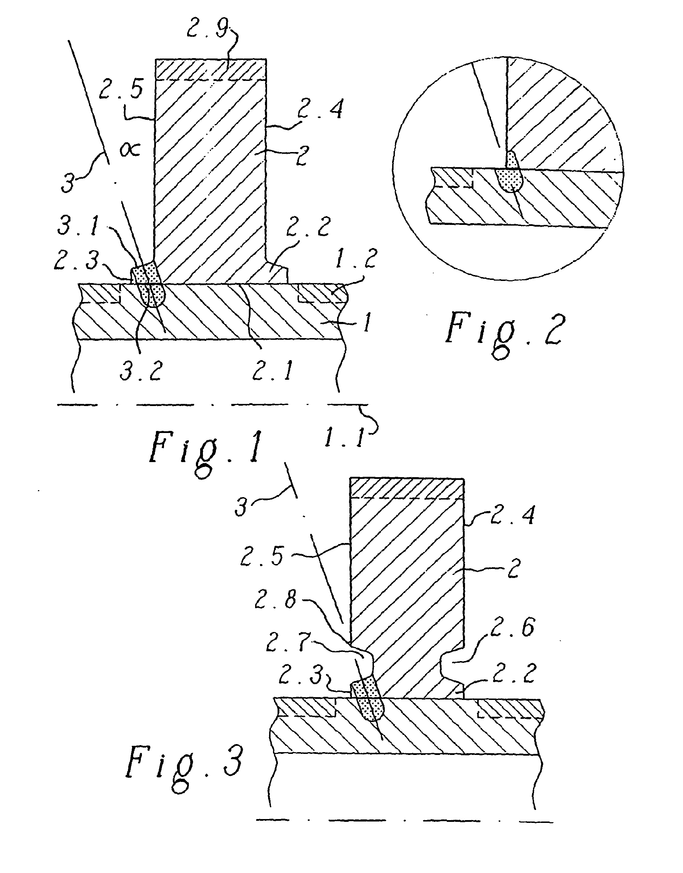

In Fig. 1 ist mit 1 ein kurzer Abschnitt einer (hier) rohrförmigen, hohlzylindrischen Welle bezeichnet, deren Achse mit 1.1 bezeichnet ist. Auf die Welle 1 ist eine ebenfalls hohlzylindrische Nocke 2 passgenau aufgeschoben. Angrenzend an ihre Öffnung bzw. Bohrung 2.1 ist diese Nocke 2 mit zwei umlaufenden Fussleisten 2.2 und 2.3 versehen, welche über die beiden Stirnseiten 2.4 und 2.5 seitlich hinausstehen.

Mittels eines mit 3 angedeuteten Laser- oder Elektronenstrahls ist die Nocke 2 auf die Welle 1 aufgeschweisst bzw. mit der Welle 1 verschweist und zwar vorzugsweise über ihren Umfang vollumlaufend entlang der Fussleiste 2.3 sowie unter einem Winkel α gegen die Radialrichtung schräg von oben durch diese hindurch. Eine gleichartige Verschweissung ist an sich auch auf der anderen Seite der Nocke 2 entlang der anderen, gleichartigen Fussleiste 2.2 vorgesehen und bevorzugt, doch ist diese in der Darstellung von Fig. 1 noch weggelassen, damit die Form und Ausbildung der Fussleisten 2.2 und 2.3 besser erkennbar ist. Gleiches gilt auch für die nachfolgenden Figuren 2, 3 und 5, in denen auch jeweils nur einseitig eine Schweissnaht dargestellt ist.

Wie in Fig. 1 deutlich erkennbar ist, ergibt sich durch das Vorhandensein der Fussleisten 2.2, 2.3 eine Schweissnaht (Schweisskegel) 3.1 mit einem praktisch optimalen Schweissquerschnitt 3.2, dessen Breite der Breite der Fussleisten etwa entspricht und dadurch eine ausserordentlich gute, hoch belastbare und dauerhafte Verbindung zwischen der Nocke 2 und der Welle 1. Fig. 2 zeigt zum Vergleich eine Schweissnaht zwischen einer Welle 1 und einer Nocke 2, wie sich sie sich unter sonst gleichen Bedingungen ohne eine Fussleiste gemäss Fig. 1 an der Nocke ergeben würde. Die Breite des Schweissquerschnitts wäre hier allenfalls halb so gross wie mit Fussleiste möglich. Auch müsste hier an sich unter einem grösseren Winkel α geschweisst werden.

Fig. 3 zeigt eine gegenüber Fig. 1 modifizierte Ausführungsform, bei welcher bei sonst gleicher Ausbildung die beiden Fussleisten 2.2 und 2.3 an der dargestellten Nocke 2 nicht über deren Stirnseiten 2.4 bzw. 2.5 vorstehen, sondern durch jeweils eine Rille 2.6 bzw. 2.7 ausgeformt sind. Die Höhe der Fussleisten 2.2 und 2.3 ergibt sich hierbei vor allem über den radialen Abstand der Rillen von der Welle 1 bzw. von der Öffnung 2.1 der Nocken. Durch die Rillen kann der Schweisstrahl 3 unter einem gleich steilen Winkel α wie in Fig. 1 vorbei an der Rillenoberkante 2.8 auf die Fussleisten 2.2 und 2.3 gerichtet werden. Durch geeignete Ausformung der Rillen 2.6 oder 2.7 kann ohne weiteres ein sogar noch steilerer Winkel α als der für die Figuren gewählte Winkel von 20° möglich sein. Ein steiler Schweiss-Winkel α kann z.B. erforderlich sein, wenn auf der Welle 1 zwei Nocken mit nur geringem gegenseitigen Abstand angeordnet werden müssen. Wie dies in Fig. 4 dargestellt ist. Ein Schweisswinkel im Bereich zwischen 3° und 40° ist insgesamt bevorzugt.

Fig. 5 zeigt unter a) - c) drei Nocken nach der Erfindung nebeneinander, wobei die unter a) dargestellte der Ausführung von Fig. 1 mit seitlich über die Stirnseiten vorstehenden Fussleisten und die unter c) dargestellte der Ausführung von Fig. 3 mit durch Rillen ausgeformten, seitlich nicht über die Stirnseiten vorstehenden Fussleisten entspricht. Die in der Mitte unter b) dargestellte Nocke stellt eine Übergangsform zwischen den beiden äusseren dar, indem bei dieser die Fussleisten nur teilweise über die Stirnseiten der Nocke seitlich überstehen, dafür aber auch die Rillen nicht so tief ausgeformt sind. Aus Fig. 5 wird deutlich, dass zwischen den beiden aussen dargestellten Varianten grundsätzlich jede Übergangsform je nach den vorgegebenen Anforderungen einsetzbar ist. Was die Formgebung der Fussleisten anbetrifft, ist es bevorzugt, diese mit einer leicht schräg verlaufenden Oberseite auszubilden, damit der Schweissstrahl etwa senkrecht auf sie auftrifft. Die Höhe der Fussleisten sollte etwa im Bereich ihrer zwischen ihrer Breite und ihrer halben Breite liegen.

Erkennbar ist bei allen in Figur 5 dargestellten Nocken die axiale Länge ihrer Öffnung bzw. Bohrung 2.1 mindestens gleich, in den Ausführungsformen gemäss a) und b) sogar grösser als ihre axiale Länge (Abstand ihrer Stirnflächen) insgesamt. Die Nocken erhalten hierdurch einen ausgezeichneten Sitz auf der Welle mit exakter Ausrichtung quer zu deren Achsrichtung. Dies gilt um so mehr, wenn die Mantelfläche der Welle und die Innenflächen der Nocken, was bevorzugt ist, glatt und zueinander passgenau bearbeitet sind.

Fig. 6 zeigt noch eine Anordnung, wie sie mit Vorteil für die Herstellung erfindungsgemässer Nockenwellen einsetzbar ist. Dargestellt ist in Fig. 6 allerdings nur schematisch eine Welle 1 mit mehreren aufgeschobenen Nocken 2 sowie pro Nocke 2 je zwei Schweissköpfe 4, welche Laser- oder Elektronenschweissköpfe sein können. Die Schweissköpfe 4 sind so ausgerichtet, dass ihre Schweissstrahlen 3 auf die Fussleisten 2.2 bzw. 2.3 der Nocken 2 auftreffen. Fig. 6 ist so zu verstehen, dass die Welle 1 durch nicht dargestellte Mittel axial eingespannt und während die Schweissköpfe 4 gleichzeitig in Betrieb gesetzt werden, um ihre Achse 1.1 gedreht wird. Auf diese Weise ist es möglich, in einem nur wenige Sekunden dauernden Vorgang alle Nocken 2 gleichzeitig auf der Welle 1 schweisstechnisch zu befestigen.

Durch das Schweissen werden die Welle 1 und die Nocken 2 vergleichsweise wenig beansprucht und behalten so mit Vorteil ihre Form. Die durch das Schweissen in die Welle 1 und die Nocken 2 lokal eingetragene Wärme kann bei rohrförmiger Welle z.B. durch Durchleiten eines Kühlmediums durch die Welle zusätzlich sogar noch abgeführt werden, was die möglichen Beeinträchtigen der Teile weiter reduziert.

Vor dem Anbringen der vorzugsweise durchgehenden Schweissnaht kann es ggf. erforderlich sein, die Nocken 2 auf der Welle in ihrer gewünschten Position und Drehstellung vorzufixieren. Dies kann z.B. durch schweisstechnisches Heften, aber auch durch eine oder mehrere der eingangs erläuterten Verbindungsmethoden nach dem Stand der Technik wie Schrumpfsitz. Formkraftschluss oder Innenhochdruck erfolgen. Da die Vorverbindung nicht besonders fest und schon gar nicht dauerhaft sein muss, können die eingangs geschilderten Nachteile der bekannten Befestigungsmethoden dabei vermieden werden.

Bedingt durch die sich aus der erfindungsgemässen Konstruktion und Befestigungstechnik ergebende Formstabilität der Wellen und der Nocken können diese, wie bereits erwähnt, schon vor ihrem Zusammenfügen auf ihr gewünschtes Endmass oder wenigstens annähernd auf dieses Endmass vorgefertigt werden. Ein aufwendiges Nachschleifen der Teile entfällt dadurch ganz oder kann zumindest in nur sehr kurzer Bearbeitungszeit ausgeführt werden Oberflächen-Härtezonen, wie die in den Figuren mit 2.9 bezeichneten Zonen auf der Mantelfäche der Nocken 2 oder die mit 1.2 bezeichneten späteren Lagerstellen an den Wellen 1 können dadurch ebenfalls vorgängig bereits angebracht werden und zwar ohne sie, wie Stand der Technik erforderlich, erheblich in ihrer Dicke oder Tiefe überdimensionieren zu müssen. Mit Vorteil können die Härtezonen 2.9 oder 1.2 mit den sowieso verwendeten Laser-oder Elektronenstrahlgeräten 4 auch erst nachträglich, d.h. nach dem Aufschweissen der Nocken erzeugt werden. Sollte es beim Aufschweissen der Nocken wider Erwarten doch zu gewissen Verbiegungen der Welle kommen, so sind diese jedenfalls so gering, dass sie durch lokale Erwärmung der Welle direkt auch wieder mit einem der Laser- oder Elektronenstrahlgeräte 4 gerichtet werden können.

Die Nocken 2 als solche bzw. die Fussleisten 2.2 und 2.3 an den Nocken können mit Vorteil einfach umformtechnisch hergestellt werden.

### BEZEICHNUNGSLISTE

- 1.: Welle
- 1.1: Achse der Welle
- 1.2: Härtezonen an der Welle
- 2: Nocken
- 2.1: Öffnung/Bohrung der Nocken
- 2.2: Fussleiste
- 2.3: Fussleiste
- 2.4: Nocken-Stimseite
- 2.5: Nocke-Stimseite
- 2.6: Rille
- 2.7: Rille
- 2.8: Kante
- 2.9: Härtezonen an den Nocken
- 3: Laser- oder Elektronensdchweissstrahl
- 3.1: Schweissnaht
- 3.2: Schweissquerschnitt
- 4: Laser- oder Elektronenschweissköpfe

## Patentansprüche

1. Nockenwelle mit einer zylindrischen Welle (1) und mit mindestens einer auf diese Welle aufgeschobenen und auf ihr dreh- und verschiebungsfest fixierten, hohlzylindrischen Nocke (2), wobei die Nocke mindestens einseitig angrenzend an die Welle mit einer Fussleiste (2.2, 2.3) versehen ist und entlang dieser mindestens einen Fussleiste mit der Welle verschweisst ist, **dadurch gekennzeichnet, dass** die Nocke durch die Fussleiste hindurch mit der Welle verschweisst ist.

2. Nockenwelle nach Anspruch 1, **dadurch gekennzeichnet, dass** die Fussleiste an einer Stirnfläche (2.4, 2.5) der Nocke seitlich angeformt ist.

3. Nockenwelle nach einem der Ansprüche 1 oder 2, **dadurch gekennzeichnet, dass** die Schweissung ohne Auftrag von zusätzlichem Material durch eine Laser- oder Elektrostrahlschweissung ausgeführt ist.

4. Nockenwelle nach einem der Ansprüche 1-3, **dadurch gekennzeichnet, dass** die Schweissung so ausgeführt ist, dass die Breite des Schweissquerschnitts (3.2) zwischen der Nocke und der Welle der Breite der Fussleiste an der Welle etwa entspricht.

5. Nockenwelle nach einem der Ansprüche 1-4, **dadurch gekennzeichnet, dass** die Welle mit mindestens zwei benachbarten Nocken versehen ist, und dass eine Fussleiste an mindestens einer dieser Nocken auf ihrer zu der anderen Nocke hin gerichteten Seite so ausgebildet ist, dass sie über ihren gesamten Umfang mit einem Laser- oder einem Elektronenschweissstrahl vorbei an der anderen Nocke unter einem Winkel (α) von höchstens 40° gegen die Radialrichtung der Welle erreichbar ist.

6. Nockenwelle nach einem der Ansprüche 1 - 5, **dadurch gekennzeichnet, dass** die Welle ein Rohr mit kreisringförmigem Querschnitt ist.

7. Verfahren zur Herstellung einer Nockenwelle nach einem der Ansprüche 1 - 6 und 19 - 28, bei welchem mindestens eine hohlzylindrische Nocke (2) mindestens einseitig angrenzend an ihre Öffnung (2.1) mit einer Fussleiste (2.2, 23) versehen wird, und diese so ausgebildete mindestens eine Nocke auf eine zylindrische Welle (1) aufgeschoben und anschliessend entlang ihrer mindestens einen Fussleiste mit der Welle verschweisst wird, **dadurch gekennzeichnet, dass** die mindestens eine Nocke durch die Fussleiste hindurch mit der Welle verschweisst wird.

8. Verfahren nach Anspruch 7, **dadurch gekennzeichnet, dass** die Schweissung ohne Auftrag von zusätzlichem Material mit einem Laser- oder Elektronenstrahlschweissgerät (4) ausgeführt wird, wobei der Laser- oder der Elektronenstrahl unter einem von der Radialrichtung der Welle abweichenden Winkel (α) aussen auf die mindestens eine Fussleiste gerichtet und die Welle mit der mindestens einen Nocke dabei um ihre Längsachse (1.1) gedreht wird.

9. Verfahren nach einem der Ansprüche 7 oder 8, **dadurch gekennzeichnet, dass** die Welle und/oder die mindestens eine Nocke vor ihrer Zusammenfügung bereits auf Endmass oder wenigstens, bis auf allenfalls 2 - 3 hundertstel Millimeter, annähernd auf Endmass bearbeitet werden.

10. Verfahren nach einem der Ansprüche 7 - 9, **dadurch gekennzeichnet, dass** die Welle im Bereich vorgesehener Lagerstellen (1.2) und/oder die mindestens eine Nocke auf ihrer Mantelfläche (2.9) vor ihrer Zusammenfügung gehärtet werden.

11. Verfahren nach einem der Ansprüche 7 - 10, **dadurch gekennzeichnet, dass** die mindestens eine Nocke auf der Welle vor dem Schweissen in ihrer gewünschten Position vorfixiert wird und zwar insbesondere durch schweisstechnisches Heften, durch thermischen Schrumpfsitz, durch Anwendung von Innenhochdruck bei rohrförmiger Welle und/oder durch einen masslichen oder formlichen, ggf. örtlich begrenzten Formkraftschluss.

12. Verfahren nach einem der Ansprüche 7 - 11, **dadurch gekennzeichnet, dass** die mindestens eine Nocke beidseitig mit einer Fussleiste versehen und entlang beider Fussleisten und durch diese hindurch gleichzeitig mit der Welle verschweisst wird.

13. Verfahren nach einem der Ansprüche 7 - 12, **dadurch gekennzeichnet, dass** mehrere Nocken nacheinander auf die Welle aufgeschoben, jedoch gleichzeitig mit der Welle verschweisst werden.

14. Verfahren nach einem der Ansprüche 7-13, **dadurch gekennzeichnet, dass** als Welle ein Rohr verwendet und das Rohr durch Durchleiten eines Kühlmediums während des Schweissens gekühlt wird.

15. Verfahren nach einem der Ansprüche 7-14, **dadurch gekennzeichnet, dass** die Welle nach dem Aufschweissen der mindestens einen Nocke bei allfälliger Längsverbiegung durch lasertechnische oder elektronenstrahltechnische lokale Erwärmung gerichtet wird.

16. Verfahren nach einem der Ansprüche 7-15, **dadurch gekennzeichnet, dass** die mindestens eine Fussleiste an der mindestens einen Nocke umformtechnisch erzeugt wird.

17. Verfahren nach einem der Ansprüche 7 - 16, **dadurch gekennzeichnet, dass** die Öffnung der mindestens einen Nocke vor ihrem Aufschieben auf die Welle mit einer glatten zylindrischen Form und einer glatten Innenfläche versehen wird.

18. Vorrichtung zur Herstellung einer Nockenwelle nach einem der Ansprüche 1 - 6 und 19 - 28 unter Ausführung des Verfahrens nach einem der Ansprüche 7 - 17, mit einer Drehhalterung für die Welle (1) und mit mindestens einem Laser-oder Elektronenschweisskopf (4), dessen Strahl (3) unter einem von der Radialrichtung der Welle abweichenden Winkel (α) auf die Welle und eine auf dieser angeordneten Nocke richtbar ist, **dadurch gekennzeichnet, dass** in Axialrichtung (1.1) ihrer Drehhalterung gestaffelt und ggf. gegeneinander im Winkel versetzt mehrere Laser- und/oder Elektronenschweissköpfe (4) vorgesehen sind.

19. Nockenwelle nach Anspruch 1, **dadurch gekennzeichnet, dass** die Fussleiste an einer Stirnfläche (2.4, 2.5) der Nocke seitlich angeformt und durch eine mit radialem Abstand von der Welle in dieser Stirnfläche vorhandene rillenförmige Einkerbung (2.6, 2.7) ausgeformt ist.

20. Nockenwelle nach Anspruch 19, **dadurch gekennzeichnet, dass** die Schweissung ohne Auftrag von zusätzlichem Material durch eine Laser- oder Elektrostrahlschweissung ausgeführt ist.

21. Nockenwelle nach einem der Ansprüche 19 oder 20, **dadurch gekennzeichnet, dass** die Schweissung so ausgeführt ist, dass die Breite des Schweissquerschnitts (3.2) zwischen der Nocke und der Welle der Breite der Fussleiste an der Welle etwa entspricht.

22. Nockenwelle nach einem der Ansprüche 19 - 21, **dadurch gekennzeichnet, dass** die Welle mit mindestens zwei benachbarten Nocken versehen ist, und dass eine Fussleiste an mindestens einer dieser Nocken auf ihrer zu der anderen Nocke hin gerichteten Seite so ausgebildet ist, dass sie über ihren gesamten Umfang mit einem Laser- oder einem Elektronenschweissstrahl vorbei an der anderen Nocke unter einem Winkel (α) von höchstens 40° gegen die Radialrichtung der Welle erreichbar ist.

23. Nockenwelle nach einem der Ansprüche 19 - 22, **dadurch gekennzeichnet, dass** die Welle ein Rohr mit kreisringförmigem Querschnitt ist.

24. Nockenwelle nach Anspruch 1, **dadurch gekennzeichnet, dass** die Fussleiste an einer Stirnfläche (2.4, 2.5) der Nocke durch eine mit radialem Abstand von der Welle in dieser Stimfläche vorhandene rillenförmige Einkerbung (2.6, 2.7) ausgeformt ist.

25. Nockenwelle nach Anspruch 24, **dadurch gekennzeichnet, dass** die Schweissung ohne Auftrag von zusätzlichem Material durch eine Laser-oder Elektrostrahlschweissung ausgeführt ist.

26. Nockenwelle nach einem der Ansprüche 24 oder 25, **dadurch gekennzeichnet, dass** die Schweissung so ausgeführt ist, dass die Breite des Schweissquerschnitts (3.2) zwischen der Nocke und der Welle der Breite der Fussleiste an der Welle etwa entspricht.

27. Nockenwelle nach einem der Ansprüche 24 bis 26, **dadurch gekennzeichnet, dass** die Welle mit mindestens zwei benachbarten Nocken versehen ist, und dass eine Fussleiste an mindestens einer dieser Nocken auf ihrer zu der anderen Nocke hin gerichteten Seite so ausgebildet ist, dass sie über ihren gesamten Umfang mit einem Laser- oder einem Elektronenschweissstrahl vorbei an der anderen Nocke unter einem Winkel (α) von höchstens 40° gegen die Radialrichtung der Welle erreichbar ist.

28. Nockenwelle nach einem der Ansprüche 24 bis 27, **dadurch gekennzeichnet, dass** die Welle ein Rohr mit kreisringförmigem Querschnitt ist.

## Claims

1. A camshaft with a cylindrical shaft (1) and with at least one hollow-cylindrical cam (2) pushed onto the latter and fixed on it securely in terms of rotation and displacement, wherein the cam is provided with a foot strip (2.2, 2.3) that borders the shaft at least on one side and is welded to the shaft along this at least one foot strip, **characterized in that** the cam is welded to the shaft through the foot strip.

2. The camshaft as claimed in claim 1, **characterized in that** the foot strip is formed laterally on a face (2.4, 2.5) of the cam.

3. The camshaft as claimed in either of claims 1 and 2, **characterized in that** the welding is performed by laser or electron-beam welding without application of additional material.

4. The camshaft as claimed in one of claims 1 - 3, **characterized in that** the welding is performed in such a way that the width of the weld cross section (3.2) between the cam and the shaft corresponds approximately to the width of the foot strip on the shaft.

5. The camshaft as claimed in one of claims 1 - 4, **characterized in that** the shaft is provided with at least two neighboring cams, and **in that** a foot strip is formed on at least one of these cams on its side directed toward the other cam in such a way that it can be reached over its entire circumference by a laser or an electron welding beam past the other cam at an angle (α) of at most 40° with respect to the radial direction of the shaft.

6. The camshaft as claimed in one of claims 1-5, **characterized in that** the shaft is a tube of annular cross section.

7. A method for producing a camshaft as claimed in one of claims 1-6 and 19 - 28, wherein at least one hollow-cylindrical cam (2) is provided with a foot strip (2.2, 23) that borders its opening (2.1) at least on one side, and wherein this at least one cam formed in this way is pushed onto a cylindrical shaft (1) and is subsequently welded to the shaft along its at least one foot strip, **characterized in that** the at least one cam is welded to the shaft through the foot strip.

8. The method as claimed in claim 7, **characterized in that** the welding is performed without application of additional material with a laser or electron-beam welding device (4), the laser or electron beam being directed from the outside onto the at least one foot strip at an angle (α) deviating from the radial direction of the shaft, and the shaft with the at least one cam being rotated at the same time about its longitudinal axis (1.1).

9. The method as claimed in either of claims 7 and 8, **characterized in that** the shaft and/or the at least one cam are already machined to the final dimensions before being assembled, or at least almost to the final dimensions, to within at most 2 - 3 hundredths of a millimeter.

10. The method as claimed in one of claims 7 - 9, **characterized in that** the shaft, in the region of intended bearing points (1.2), and/or the at least one cam, on its lateral surface (2.9), are hardened before being assembled.

11. The method as claimed in one of claims 7-10, **characterized in that** the at least one cam is pre-fixed in its desired position on the shaft before the welding, in particular by tack welding, by a thermal shrink fit, by applying high internal pressure in the case of a tubular shaft and/or by a dimensional or shape-related, possibly locally limited, frictional positive engagement.

12. The method as claimed in one of claims 7-11, **characterized in that** the at least one cam is provided with a foot strip on both sides and is welded to the shaft simultaneously along and through both foot strips.

13. The method as claimed in one of claims 7-12, **characterized in that** a plurality of cams are pushed onto the shaft one after the other, but are welded to the shaft simultaneously.

14. The method as claimed in one of claims 7 - 13, **characterized in that** a tube is used as the shaft and the tube is cooled during the welding by passing through a cooling medium.

15. The method as claimed in one of claims 7-14, **characterized in that**, after the welding-on of the at least one cam, if there is any longitudinal bending, the shaft is straightened by local heating using laser or electron-beam techniques.

16. The method as claimed in one of claims 7 - 15, **characterized in that** the at least one foot strip is produced on the at least one cam by forming techniques.

17. The method as claimed in one of claims 7 - 16, **characterized in that** the opening of the at least one cam is provided with a smooth cylindrical form and a smooth inner surface before it is pushed onto the shaft.

18. A device for producing a camshaft as claimed in one of claims 1 - 6 and 19 - 28 by performing the method as claimed in one of claims 7 - 17, comprising a rotational securing means for the shaft (1) and at least one laser or electron welding head (4), the beam (3) of which can be directed onto the shaft, and a cam arranged on the latter, at an angle (α) deviating from the radial direction of the shaft, **characterized in that** a plurality of laser and/or electron welding heads (4) are provided in a staggered manner and possibly offset at an angle with respect to one another in the axial direction (1.1) of their rotational securing means.

19. The camshaft as claimed in claim 1, **characterized in that** the foot strip is formed laterally on a face (2.4, 2.5) of the cam and is formed by a groove-shaped notching (2.6, 2.7) present in this face at a radial distance from the shaft.

20. The camshaft as claimed in claim 19, **characterized in that** the welding is performed by laser or electron-beam welding without application of additional material.

21. The camshaft as claimed in one of claims 19 or 20, **characterized in that** the welding is performed in such a way that the width of the weld cross section (3.2) between the cam and the shaft corresponds approximately to the width of the foot strip on the shaft.

22. The camshaft as claimed in one of claims 19 - 21, **characterized in that** the shaft is provided with at least two neighboring cams, and **in that** a foot strip is formed on at least one of these cams on its side directed toward the other cam in such a way that it can be reached over its entire circumference by a laser or an electron welding beam past the other cam at an angle (α) of at most 40° with respect to the radial direction of the shaft.

23. The camshaft as claimed in one of claims 19 - 22, **characterized in that** the shaft is a tube of annular cross section.

24. The camshaft as claimed in claim 1, **characterized in that** the foot strip is formed laterally on a face (2.4, 2.5) of the cam by a groove-shaped notching (2.6, 2.7) present in this face at a radial distance from the shaft.

25. The camshaft as claimed in claim 24, **characterized in that** the welding is performed by laser or electron-beam welding without application of additional material.

26. The camshaft as claimed in one of claims 24 or 25, **characterized in that** the welding is performed in such a way that the width of the weld cross section (3.2) between the cam and the shaft corresponds approximately to the width of the foot strip on the shaft.

27. The camshaft as claimed in one of claims 24 - 26, **characterized in that** the shaft is provided with at least two neighboring cams, and **in that** a foot strip is formed on at least one of these cams on its side directed toward the other cam in such a way that it can be reached over its entire circumference by a laser or an electron welding beam past the other cam at an angle (α) of at most 40° with respect to the radial direction of the shaft.

28. The camshaft as claimed in one of claims 24 - 27, **characterized in that** the shaft is a tube of annular cross section.

## Revendications

1. Arbre à cames comprenant un arbre cylindrique (1) et comprenant au moins une came cylindrique creuse (2) enfilée sur cet arbre et fixée sur celui-ci de manière à ne pas pouvoir tourner ni coulisser, la came étant munie au moins d'un côté d'une plinthe (2.2, 2.3) adjacente à l'arbre et étant soudée à l'arbre le long de cette au moins une plinthe, **caractérisé en ce que** la came est soudée avec l'arbre à travers la plinthe.

2. Arbre à cames selon la revendication 1, **caractérisé en ce que** la plinthe est façonnée latéralement sur une face frontale (2.4, 2.5) de la came.

3. Arbre à cames selon l'une des revendications 1 ou 2, **caractérisé en ce que** le soudage est réalisé sans apport de matériau supplémentaire par soudage au laser ou à jet d'électrons.

4. Arbre à cames selon l'une des revendications 1 à 3, **caractérisé en ce que** le soudage est exécuté de telle sorte que la largeur de la section soudée (3.2) entre la came et l'arbre corresponde approximativement à la largeur de la plinthe sur l'arbre.

5. Arbre à cames selon l'une des revendications 1 à 4, **caractérisé en ce que** l'arbre est muni d'au moins deux cames voisines et qu'une plinthe sur au moins l'une de ces cames est configurée sur son côté dirigé vers l'autre came de telle sorte qu'elle est accessible sur tout son pourtour à un rayon de soudage à laser ou d'électrons devant l'autre came sous un angle (α) maximum de 40° par rapport au sens radial de l'arbre.

6. Arbre à cames selon l'une des revendications 1 à 5, **caractérisé en ce que** l'arbre est un tube ayant une section transversale circulaire.

7. Procédé de fabrication d'un arbre à cames selon l'une des revendications 1 à 6 et 19 à 28, avec lequel au moins une came cylindrique creuse (2) est munie au moins d'un côté d'une plinthe (2.2, 2.3) adjacente à son ouverture (2.1) et cette au moins une came ainsi configurée est enfilée sur un arbre cylindrique (1) et ensuite soudée avec l'arbre le long de sa au moins une plinthe, **caractérisé en ce que** l'au moins une came est soudée avec l'arbre à travers la plinthe.

8. Procédé selon la revendication 7, **caractérisé en ce que** le soudage est réalisé sans apport de matériau supplémentaire avec un appareil de soudage au laser ou à jet d'électrons (4), le rayon laser ou d'électrons étant dirigé à l'extérieur sur l'au moins une plinthe sous un angle (α) différent du sens radial de l'arbre et l'arbre muni de l'au moins une came étant ici pivoté autour de son axe longitudinal (1.1).

9. Procédé selon l'une des revendications 7 ou 8, **caractérisé en ce que** l'arbre et/ou l'au moins une came sont déjà usinés à leur cote finale avant leur assemblage ou au moins approximativement à leur cote finale, tout au plus à 2-3 centièmes de millimètre près.

10. Procédé selon l'une des revendications 7 à 9, **caractérisé en ce qu'**avant leur assemblage, l'arbre est trempé dans la zone des points d'appui prévus (1.2) et/ou l'au moins une came est trempée sur sa surface d'enveloppe (2.9).

11. Procédé selon l'une des revendications 7 à 10, **caractérisé en ce que** l'au moins une came est fixée préalablement sur l'arbre avant le soudage dans la position souhaitée, et ce notamment par pointage par technique de soudage, par ajustement fretté thermique, en utilisant une haute pression interne dans le cas d'un arbre tubulaire et/ou par un engagement géométrique des cotes ou des formes, éventuellement limité localement.

12. Procédé selon l'une des revendications 7 à 11, **caractérisé en ce que** l'au moins une came est munie des deux côtés d'une plinthe et elle est soudée avec l'arbre le long des deux plinthes et en même temps à travers celles-ci.

13. Procédé selon l'une des revendications 7 à 12, **caractérisé en ce que** plusieurs cames sont enfilées les unes après les autres sur l'arbre, mais sont cependant soudées simultanément avec l'arbre.

14. Procédé selon l'une des revendications 7 à 13, **caractérisé en ce qu'**un tube est utilisé comme arbre et le tube est refroidi pendant le soudage par circulation d'un fluide de refroidissement.

15. Procédé selon l'une des revendications 7 à 14, **caractérisé en ce que** l'arbre, après le soudage de l'au moins une came, en cas d'éventuelle courbure longitudinale, est redressé par échauffement local par technique au laser ou technique de jet d'électrons.

16. Procédé selon l'une des revendications 7 à 15, **caractérisé en ce que** l'au moins une plinthe sur l'au moins une came est produite par technique de formage.

17. Procédé selon l'une des revendications 7 à 16, **caractérisé en ce que** l'ouverture de l'au moins une came est munie d'une forme cylindrique lisse et d'une surface intérieure lisse avant son enfilement sur l'arbre.

18. Dispositif de fabrication d'un arbre à cames selon l'une des revendications 1 à 6 et 19 à 28 en mettant en oeuvre le procédé selon l'une des revendications 7 à 17, comprenant un support rotatif pour l'arbre (1) et comprenant au moins une tête de soudage à laser ou à jet d'électrons (4) dont le rayon (3) peut être dirigé sur l'arbre et sur une came disposée sur celui-ci sous un angle (α) différent du sens radial de l'arbre, **caractérisé en ce que** plusieurs têtes de soudage à laser et/ou à jet d'électrons (4) sont prévues étagées et éventuellement avec un décalage angulaire les unes par rapport aux autres dans le sens axial (1.1) de son support rotatif.

19. Arbre à cames selon la revendication 1, **caractérisé en ce que** la plinthe est façonnée latéralement sur une face frontale (2.4, 2.5) de la came et se termine par une entaille en forme de rainure (2.6, 2.7) présente dans cette face frontale à une distance radiale donnée de l'arbre.

20. Arbre à cames selon la revendication 19, **caractérisé en ce que** le soudage est réalisé sans apport de matériau supplémentaire par soudage au laser ou à jet d'électrons.

21. Arbre à cames selon l'une des revendications 19 ou 20, **caractérisé en ce que** le soudage est exécuté de telle sorte que la largeur de la section soudée (3.2) entre la came et l'arbre corresponde approximativement à la largeur de la plinthe sur l'arbre.

22. Arbre à cames selon l'une des revendications 19 à 21, **caractérisé en ce qu'**il est prévu au moins deux cames voisines et qu'une plinthe sur au moins l'une de ces cames est configurée sur son côté dirigé vers l'autre came de telle sorte qu'elle est accessible sur tout son pourtour à un rayon de soudage à laser ou d'électrons devant l'autre came sous un angle (α) maximum de 40° par rapport au sens radial de l'arbre.

23. Arbre à cames selon l'une des revendications 19 à 22, **caractérisé en ce que** l'arbre est un tube ayant une section transversale circulaire.

24. Arbre à cames selon la revendication 1, **caractérisé en ce que** la plinthe se termine sur une face frontale (2.4, 2.5) de la came par une entaille en forme de rainure (2.6, 2.7) présente dans cette face frontale à une distance radiale donnée de l'arbre.

25. Arbre à cames selon la revendication 24, **caractérisé en ce que** le soudage est réalisé sans apport de matériau supplémentaire par soudage au laser ou à jet d'électrons.

26. Arbre à cames selon l'une des revendications 24 ou 25, **caractérisé en ce que** le soudage est exécuté de telle sorte que la largeur de la section soudée (3.2) entre la came et l'arbre corresponde approximativement à la largeur de la plinthe sur l'arbre.

27. Arbre à cames selon l'une des revendications 24 à 26, **caractérisé en ce que** l'arbre est muni d'au moins deux cames voisines et qu'une plinthe sur au moins l'une de ces cames est configurée sur son côté dirigé vers l'autre came de telle sorte qu'elle est accessible sur tout son pourtour à un rayon de soudage à laser ou d'électrons devant l'autre came sous un angle (α) maximum de 40° par rapport au sens radial de l'arbre.

28. Arbre à cames selon l'une des revendications 24 à 27, **caractérisé en ce que** l'arbre est un tube ayant une section transversale circulaire.
